(19) Europäisches Patentamt
European Patent Office
Office européen des brevets

(11) EP 0 758 360 B1

(12) **EUROPÄISCHE PATENTSCHRIFT**

(45) Veröffentlichungstag und Bekanntmachung des Hinweises auf die Patenterteilung:
**15.07.1998 Patentblatt 1998/29**

(21) Anmeldenummer: **95917965.6**

(22) Anmeldetag: **26.04.1995**

(51) Int Cl.6: **C08L 101/00**, B41M 5/24, B41M 1/30

(86) Internationale Anmeldenummer:
**PCT/EP95/01580**

(87) Internationale Veröffentlichungsnummer:
**WO 95/30716 (16.11.1995 Gazette 1995/49)**

# (54) THERMOPLASTISCHE FORMMASSEN MIT GUTER BESCHRIFTBARKEIT

EASILY WRITABLE THERMOPLASTIC MOULDING MATERIALS

MATIERES MOULABLES THERMOPLASTIQUES PERMETTANT L'ECRITURE

(84) Benannte Vertragsstaaten:
**AT BE CH DE ES FR GB IT LI NL**

(30) Priorität: **06.05.1994 DE 4416129**

(43) Veröffentlichungstag der Anmeldung:
**19.02.1997 Patentblatt 1997/08**

(73) Patentinhaber: **BASF AKTIENGESELLSCHAFT**
**67056 Ludwigshafen (DE)**

(72) Erfinder:
- **GAREISS, Brigitte**
  **D-67271 Obersülzen (DE)**
- **STREIB, Jürgen**
  **D-67547 Worms (DE)**
- **WELZ, Martin**
  **D-67098 Bad Dürkheim (DE)**
- **GÖRRISSEN, Heiner**
  **D-67069 Ludwigshafen (DE)**

(56) Entgegenhaltungen:
**EP-A- 0 367 629**
**WO-A-91/00876**
**DE-A- 4 319 190**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Formmassen auf der Basis thermoplastischer oder duroplastischer Kunststoffe A), enthaltend 0,05 bis 10 Gew.-%, bezogen auf A), eines Mikropulvers mit sphärischen Teilchen einer im wesentlichen glatten Oberflächenstruktur und einer Dichte, die im wesentlichen der der Komponente B) entspricht und das Mikropulver durch Prillen der Schmelzen oder Sprühtrocknung der Lösungen der Polymeren B) erhältlich ist, welches als wesentliche Komponente mindestens ein Polymer B), welches verschieden von A) ist, enthält, ausgewählt aus der Gruppe der Polyphenylenether, POlyarylenethersulfone, Polyarylenetherketone oder Polyimide.

Außerdem betrifft die Erfindung die Verwendung derartiger Formmassen zur Herstellung von Formkörpern jeglicher Art und die hierbei erhältlichen Formkörper.

Weiterhin betrifft die Erfindung die Verwendung derartiger Formmassen zur Herstellung von mit energiereicher Strahlung beschriftbaren Formkörpern und ein Verfahren zur Herstellung solcher beschriftbaren Formkörper sowie entsprechende beschriftete Formkörper.

Eine Reihe von Thermoplasten sind ohne entsprechende Einfärbung (z.B. Ruß, Knochenkohle) nicht zu beschriften, weil die Laserstrahlung nicht absorbiert wird. So sind PA und POM nicht mit dem für die Laserbeschriftung üblicherweise eingesetztem Nd:YAG-Laser beschriftbar, PBT nur mit sehr geringem Kontrast.

Aus der DE-A 30 44 722 und EP-A 522 370 sind Beschriftungsverfahren bekannt, wobei Ruß bzw. Knochenkohle als Füllstoff eingesetzt wird. Der Mechanismus dieser Beschriftung basiert auf der lokalen Sublimation des Kohlenstoffs in Ruß oder Knochenkohle und/oder Verbrennung zu $CO_2$, welches als Gas entweicht, wodurch eine schaumartige Schmelzzone in Form des zu übertragenden Zeichens entsteht, in der sich keine Rußpartikel mehr befinden. Diese Formmassen sind zwar besser zu beschriften, doch ist eine Beschriftung in dunkler Schrift vor hellem Hintergrund nicht möglich.

Gut laserbeschriftbare Polymere, wie die HT-Thermoplasten Polyethersulfon und -keton, können durch Zumischen zu nicht beschriftbaren Polymeren deren Beschriftbarkeit verbessern.

Nachteilig wirkt sich jedoch die Unverträglichkeit der Polymerkomponenten auf die mechanischen Eigenschaften aus.

Mikropulver aus Polyethersulfon sind aus der WO 91/00876 bekannt. Derartige Mikropulver sind jedoch bedingt durch ihre Herstellweise verdichtete Mikropulver, welche keine sphärische Oberfläche aufweisen.

Mischungen aus fluorierten Polymeren und Polyetherketonen und deren Laserbeschriftung sind aus der EP-A 367 629 bekannt, wobei die Mischungen durch Mischen der Polymeren in Granulatform erhältlich sind.

Der vorliegenden Erfindung lag daher die Aufgabe zugrunde, Formmassen zur Verfügung zu stellen, die trotz der Unverträglichkeit der beiden Polymerkomponenten sich gut verarbeiten lassen und gute mechanische Eigenschaften aufweisen. Weiterhin lag der Erfindung die Aufgabe zugrunde, mit energiereicher Strahlung beschriftbare Formmassen bzw. Formkörper zur Verfügung zu stellen, die insbesondere eine gute Beschriftung in dunkler Schrift vor hellem Hintergrund mit einem guten Kontrast liefern.

Diese Aufgabe wird erfindungsgemäß durch die Formmassen gemäß Anspruch 1 gelöst. Bevorzugte Massen dieser Art sind den Unteransprüchen zu entnehmen.

Die erfindungsgemäßen Formmassen enthalten als wesentliche Komponente mindestens einen thermoplastischen oder duroplastischen Kunststoff A), dessen Gewichtsanteil, bezogen auf das Gesamtgewicht der Formmassen bis zu 99,95 Gew.-% betragen kann, wenn der Anteil an Mikropulver 0,05 Gew.-% und die Formmasse keine weiteren Komponenten enthält.

Grundsätzlich zeigt sich der vorteilhafte Effekt bei den erfindungsgemäßen Formmassen bei Kunststoffen jeglicher Art. Eine Aufzählung geeigneter Thermoplaste und Duroplaste findet sich beispielsweise im Kunststoff-Taschenbuch (Hrsg. Saechtling), Auflage 1989, wo auch Bezugsquellen genannt sind. Verfahren zur Herstellung solcher thermoplastischer oder duroplastischer Kunststoffe sind dem Fachmann an sich bekannt. Nachstehend seien einige bevorzugte Kunststoffarten etwas näher erläutert.

1. Polyoxymethylenhomo- oder -copolymerisate

Derartige Polymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere bevorzugt, insbesondere solche, die neben den wiederkehrenden Einheiten $-CH_2O-$ noch bis zu 50, vorzugsweise 0,1 bis 20 und insbesondere 0,3 bis 10 mol-% an wiederkehrenden Einheiten

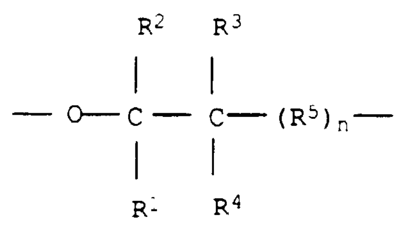

enthalten, wobei $R^1$ bis $R^4$ unabhängig voneinander ein Wasserstoffatom, eine C1- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl- oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

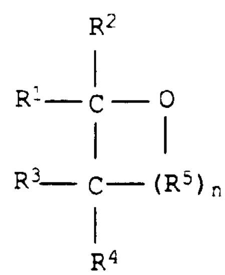

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

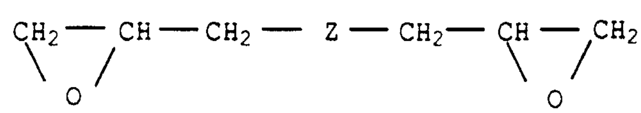

wobei Z eine chemische Bindung, -O-, -ORO- (R= $C_1$- bis $C_8$-Alkylen oder $C_2$- bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) Mw im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

2. Polycarbonate und Polyester

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

3. Polyolefine

Hier sind ganz allgemein Polyethylen und Polypropylen sowie Copolymerisate auf der Basis von Ethylen oder Propylen, ggf. auch mit höheren $\alpha$-Olefinen zu nennen. Entsprechende Produkte sind unter den Handelsnamen Lupolen® bzw. Novolen® von der BASF Aktiengesellschaft erhältlich.

4. Polymethacrylate

Hierunter sind insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl® von der BASF Aktiengesellschaft oder Plexiglas® von Röhm GmbH erhältlich sind.

5. Polyamide

Bevorzugt sind ganz allgemein Polyamide mit aliphatischem teilkristallinen oder teilaromatischem sowie amorphem Aufbau jeglicher Art und deren Blends. Entsprechende Produkte sind unter dem Handelsnamen Ultramid® von der BASF AG erhältlich.

Es versteht sich, daß auch Mischungen thermoplastischer oder duroplastischer Kunststoffe eingesetzt werden können.

Der Gewichtsanteil an thermoplastischen oder duroplastischen Kunststoffen A) in den erfindungsgemäßen Formmassen liegt im allgemeinen im Bereich von 40 bis 99,95, vorzugsweise 60 bis 99,9 und insbesondere von 90 bis 99,5 Gew.-%.

Als weitere Komponente enthalten die erfindungsgemäßen Formmassen 0,05 bis 10, vorzugsweise 0,1 bis 5 und insbesondere 0,5 bis 3 Gew.-% eines Mikropulvers mit sphärischen Teilchen einer im wesentlichen glatten Oberflächenstruktur und einer Dichte, die im wesentlichen der der Komponente B) entspricht und das Mikropulver durch Prillen der Schmelzen oder Sprühtrocknung der Lösungen der polymeren B) erhältlich ist, welches als wesentliche Komponenten mindestens ein Polymer B), welches verschieden von A) ist, enthält, ausgewählt aus der Gruppe der Polyphenylenether, Polyarylenetherketone, Polyarylenethersulfone oder Polyimide.

Die erfindungsgemäß verwendbaren Mikropulver sind überraschenderweise dadurch erhältlich, daß man die Polymeren B) schmilzt oder löst oder deren Viskosität mit einer geeigneten Flüssigkeit herabsetzt und sie anschließend prillt bzw. sprühtrocknet. Derartige Mikropulver sind in der DE-A 43 00 326 beschrieben, sowie Verfahren zu ihrer

Herstellung. Die gemäß der Lehre der DE-A43 00 326 erhältlichen Teilchen sind regelmäßig und rund und weisen eine nahezu porenlose Oberfläche auf. Der mittlere Teilchendurchmesser (Volumenmittelwert) beträgt in der Regel 1 µm oder mehr. Er kann auch darunter liegen, meist ist er jedoch nicht kleiner als 0,5 µm. Im allgemeinen können die mittleren Teilchendurchmesser bis zu 80 µm betragen. Es ist auch möglich, daß sie geringfügig größer sind, beispielsweise 100 µm. Vorzugsweise betragen die mittleren Teilchendurchmesser 2 bis 70 µm, besonders bevorzugt 5 bis 50 µm, insbesondere 10 bis 20 µm. Für einige Anwendungen kann ein mittlerer Teilchendurchmesser von bis zu 300 µm erforderlich sein. Es ist auch möglich, daß sie größer sind, beispielsweise 350 µm, jedoch bringen mittlere Teilchendurchmesser von mehr als 500 µm auch für Anwendungen wie das Herstellen der erfindungsgemäßen Formmassen meist keine Vorteile mehr. Die Teilchen weisen im allgemeinen die Dichte der ihnen zugrundeliegenden Polymeren B) auf. Die Dichte der Teilchen kann aber auch geringfügig darunter liegen, beispielsweise wenn kleine Mengen Gas umschlossen werden.

Die Mikropulver zeichnen sich durch eine enge Teilchengrößenverteilung aus. Als Maß für die Breite der Teilchengrößenverteilung läßt sich der relative Spanfaktor Δ angeben (siehe A.H. Lefebvre: "Atomization and Sprays", Hemisphere Publishing Corporation, 1989, Seite 100, Gleichung 3.40). Der relative Spanfaktor der erfindungsgemäßen Mikropulver beträgt im allgemeinen 1 bis 2. Er kann aber auch darüber liegen, meist jedoch nicht über 2,5. Bevorzugt werden Spanfaktoren bis etwa 1,5. Ganz besonders bevorzugt sind die Spanfaktoren kleiner als 1.

Als wesentliche Komponente B enthalten die erfindungsgemäßen Mikropulver Polyarylenethersulfone oder -ketone $B_1$). Diese enthalten wiederkehrende Einheiten I

$$-N-Ar\left(-T-Ar^1\right)_t-Z\left(-Ar^2-Q\right)_q-Ar^3- \qquad (I)$$

Dabei können t und q unabhängig voneinander gleich oder verschieden voneinander sein und jeweils den Wert 0 oder eine ganze Zahl von 1 bis 3 annehmen. N bedeutet entweder -O- oder -S-, bevorzugt -O-. Unabhängig voneinander können T und Q gleich oder verschieden sein. Sie können eine chemische Bindung oder eine Gruppe ausgewählt aus -O-, -S-, C=O, S=O, $-SO_2-$, -N=N-, $-R^aC=CR^b-$ und $-CR^cR^d$ bedeuten. Darunter sind -O-, C=O, $-SO_2-$ und $-CR^cR^d-$ besonders bevorzugt. Bevorzugt sind T und Q auch eine chemische Bindung. $R^a$ bis $R^d$ können unabhängig voneinander entweder gleich oder verschieden voneinander sein und können entweder jeweils Wasserstoffatome oder $C_1$- bis $C_{10}$-Alkylgruppen, wie Methyl, Ethyl, Propyl oder t-Butyl, bevorzugt Wasserstoff oder Methyl bedeuten. Darüber hinaus können $R^c$ und $R^d$ auch $C_1$- bis $C_{10}$-Alkoxy-, $C_1$- bis $C_{10}$-Alkylaryl- oder $C_6$- bis $C_{18}$-Arylgruppen darstellen. Zu den bevorzugten Gruppen zählen Methoxy, Ethoxy, Propoxy, t-Butoxy, Benzyl und Phenyl. Die vorgenannten Gruppen können jeweils auch mit Fluor und/oder Chloratomen substituiert sein. Als Beispiel ist die Trifluormethyl- oder die p-Chlorphenylgruppe zu nennen. Erfindungsgemäß ist Z eine Gruppe ausgewählt aus C=O, S=O und $-SO_2-$, wobei C=O und $-SO_2-$ besonders bevorzugt werden. Die Variablen Ar bis $Ar^3$ können unabhängig voneinander die gleiche Bedeutung haben oder verschieden voneinander sein. Erfindungsgemäß stehen sie für $C_6$- bis $C_{18}$-Arylgruppen, Zu diesen zählen Phenyl, Biphenyl und Naphthyl. Vorzugsweise sind die Arylgruppen nicht substituiert, können aber Substituenten ausgewählt aus der Gruppe der $C_1$- bis $C_{10}$-Alkyl-, $C_1$- bis $C_{10}$-Alkylaryl, $C_6$- bis $C_{18}$-Aryl, $C_1$- bis $C_{10}$-Alkoxyreste und Halogenatome haben. Beispiele geeigneter Substituenten sind Methyl, Ethyl, Propyl, 1-Propyl, n-Butyl, 1-Pentyl, n-Hexyl, Methoxy, Ethoxy, Propoxy, Butoxy, Benzyl, Ethylphenyl, Phenyl, Fluor oder Chlor.

Im folgenden sind einige der bevorzugten wiederkehrenden Einheiten I aufgeführt:

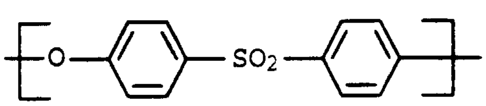

$(I_1)$

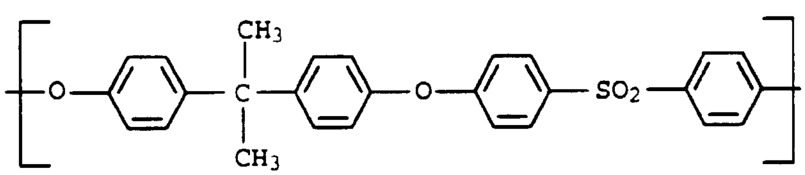

$(I_2)$

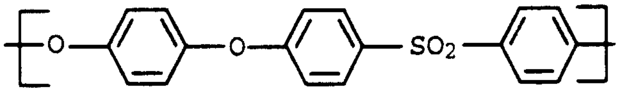

$(I_3)$

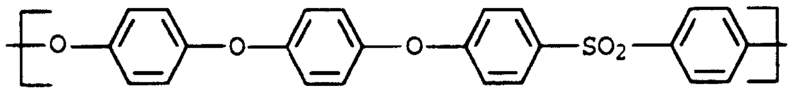
($I_4$)

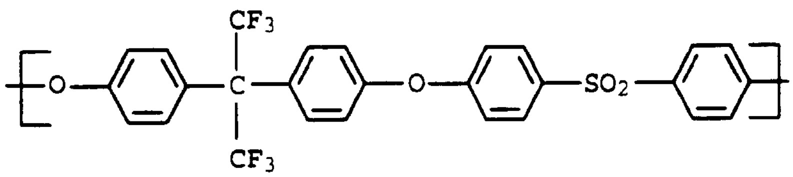
($I_5$)

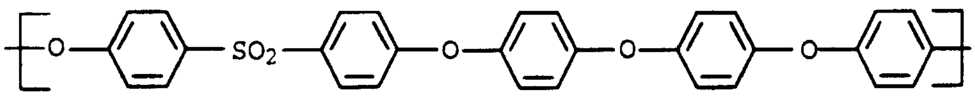
($I_6$)

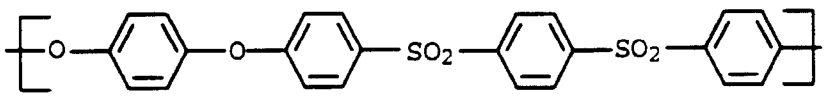
($I_7$)

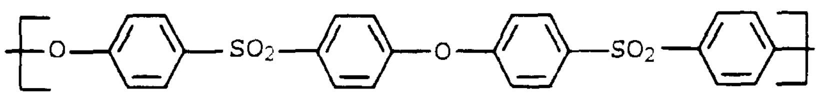
($I_8$)

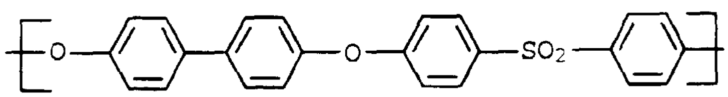
($I_9$)

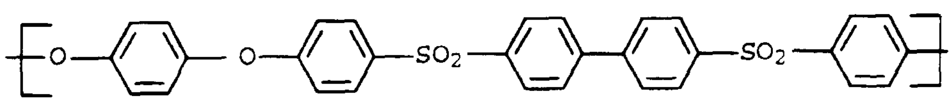
($I_{10}$)

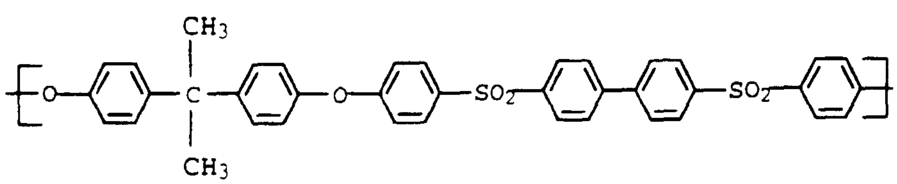
($I_{11}$)

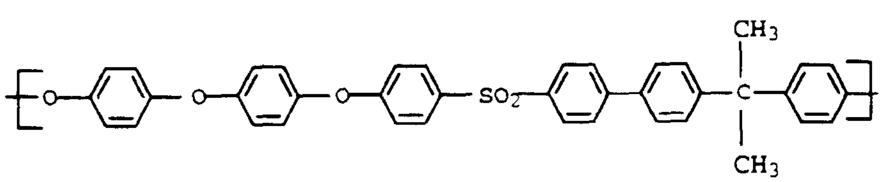
($I_{12}$)

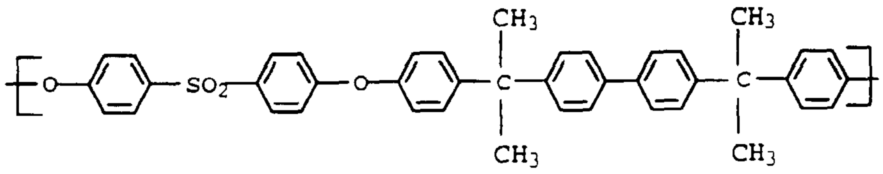

$(I_{13})$

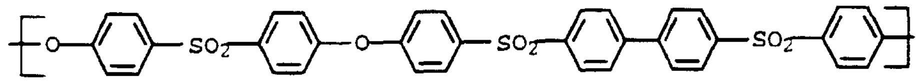

$(I_{14})$

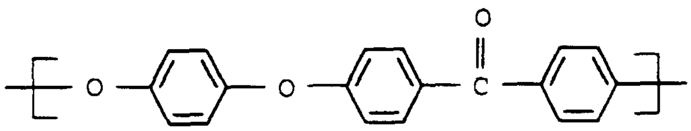

$(I_{15})$

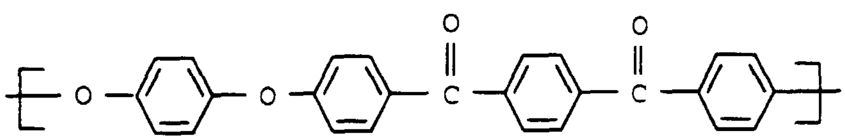

$(I_{16})$

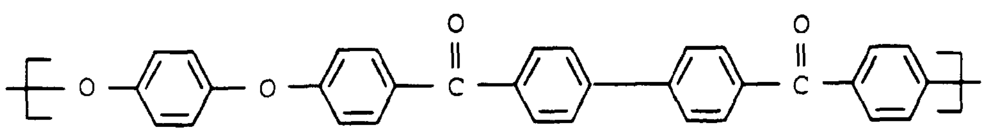

$(I_{17})$

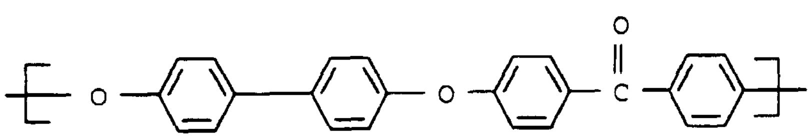

$(I_{18})$

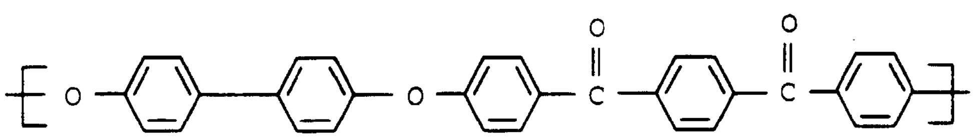

$(I_{19})$

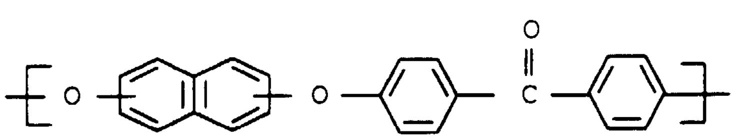

$(I_{20})$

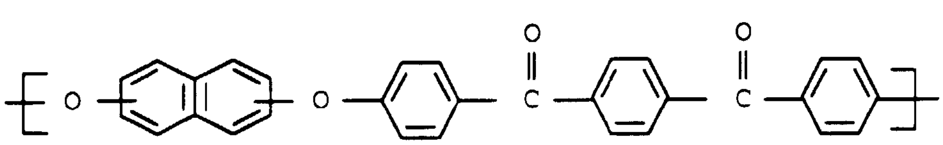

$(I_{21})$

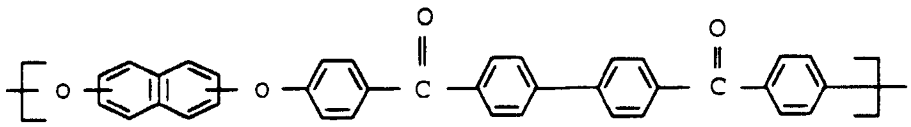

($I_{22}$)

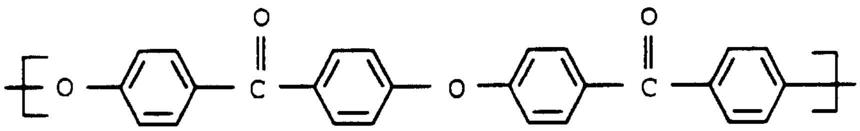

($I_{23}$)

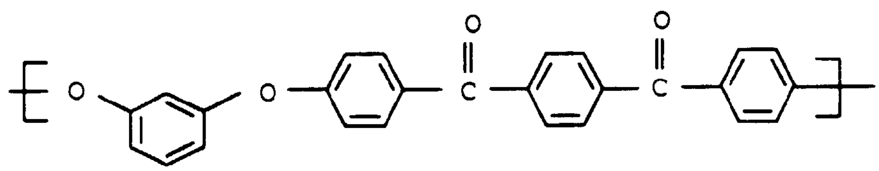

($I_{24}$)

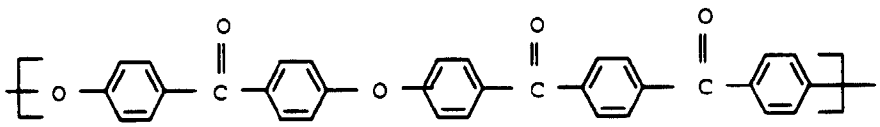

($I_{25}$)

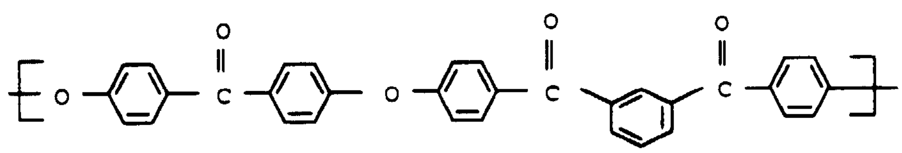

($I_{26}$)

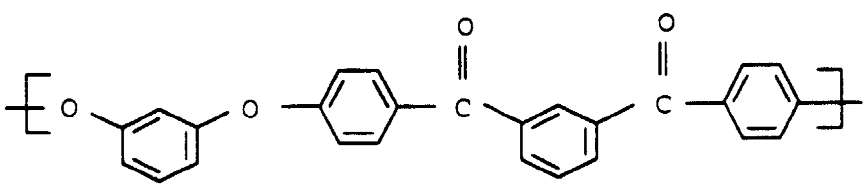

($I_{27}$)

Ganz besonders werden Mikropulver bevorzugt, die als wesentliche Komponente $B_1$) Polyarylenethersulfone oder -ketone mit Struktureinheiten ($I_1$), ($I_2$), ($I_{25}$) oder ($I_{26}$) enthalten. Dazu zählen beispielsweise Mikropulver, die als wesentliche Komponente $B_1$) Polyarylenethersulfone mit 0 bis 100 Mol-%, bevorzugt 5 bis 95 Mol-% Struktureinheiten ($I_1$) und 0 bis 100 Mol-%, bevorzugt 5 bis 95 Mol-% Struktureinheiten ($I_2$) enthalten.

Die Polyarylenethersulfone oder -ketone können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte der Blöcke bzw. der Pfropfarme in den Copolymeren liegt in der Regel im Bereich von 1 000 bis 30 000 g/mol. Die Blöcke unterschiedlicher Struktur können alternierend oder statistisch angeordnet sein. Der Gewichtsanteil der Polyarylenethersulfone oder -ketone in den Co- oder Blockcopolymeren beträgt im allgemeinen mindestens 3, vorzugsweise mindestens 10 Gew.-%. Der Gewichtsanteil der Polyarylenethersulfone oder -ketone kann bis zu 97 Gew.-% betragen. Bevorzugt werden Co- oder Blockcopolymere mit einem Gewichtsanteil an Polyarylenethersulfone oder -ketone mit bis zu 90 Gew.-%. Besonders bevorzugt werden Co- oder Blockcopolymere mit 20 bis 80 Gew.-% Polyarylether.

Die Polyarylenethersulfone oder -ketone können beliebige Endgruppen z.B. Halogen-, Methoxy-, Benzyloxy-, Phenoxy- oder Aminogruppen enthalten. Bevorzugte Endgruppen sind Halogen- oder Methoxygruppen.

Im allgemeinen weisen die Polyarylenethersulfone oder -ketone mittlere Molekulargewichte $\overline{M}_n$ (Zahlenmittel) im Bereich von 15 000 bis 60 000 g/mol und relative Viskositäten von 0,25 bis 0,95 dl/g auf. Die relativen Viskositäten werden je nach Löslichkeit der Polyarylenethersulfone oder -ketone entweder in 1 gew.-%iger N-Methylpyrrolidon-Lösung, in Mischungen aus Phenol und Dichlormethan oder in 96 %iger Schwefelsäure bei jeweils 20°C bzw. 25°C gemessen.

Die als Komponente $B_1$) in Betracht kommenden Polyarylenethersulfone oder -ketone sind an sich bekannt und können nach an sich bekannten Methoden hergestellt werden.

Erfindungsgemäß können die Mikropulver als wesentliche Komponente B) Polyarylenethersulfone oder -ketone enthalten, die durch Umsetzen eines Polyarylenethersulfons oder -ketons $B_1$) mit einer reaktiven Verbindung erhältlich sind. Die reaktiven Verbindungen enthalten neben einer C,C-Doppel- oder Dreifachbindung eine bzw. mehrere Carbonyl-, Carbonsäure-, Carboxylat-, Säureanhydrid-, Säureimid-, Carbonsäureester-, Amino-, Hydroxyl-, Epoxi-, Oxazolin-, Urethan-, Harnstoff-, Lactam- oder Halogenbenzylgruppe.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$-$C_{18}$-Alkanolen, die Mono- oder Diamide dieser Säuren wie N-Phenylmaleinimid, Maleinsäurehydrazid.

Bevorzugt werden α, β-ungesättigte Dicarbonsäuren bzw. deren Anhydride, Di-Ester und Mono-Ester der nachstehenden allgemeinen Struktur IV und V verwendet.

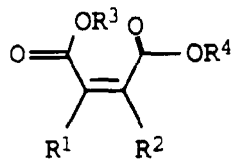

(IV)

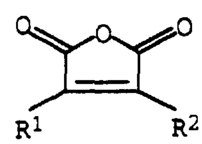

(V)

wobei
$R^1$, $R^2$, $R^3$ und $R^4$ unabhängig voneinander Wasserstoff sowie $C_1$-$C_{18}$-Alkyl-Gruppen sein können.

Besonders geeignete Verbindungen sind Maleinsäureanhydrid, Fumarsäure und Itaconsäure.

Die Polymeren und die reaktive Verbindung können z.B. in einem aromatischen Lösungsmittel miteinander umgesetzt werden. Als besonders geeignete Lösungsmittel haben sich Chlorbenzol, o-Dichlorbenzol und N-Methylpyrrolidon erwiesen. Dabei wird im allgemeinen ein üblicher Radikalinitiator eingesetzt. Die Umsetzung wird im allgemeinen bei 75 - 150°C ausgeführt. Das Reaktionsprodukt wird durch Fällung mit einem üblichen Fällungsmittel, wie niedermolekularer Alkohol und Keton, oder durch Entfernen des Lösungsmittels (z.B. im Entgasungsextruder, Dünnschichtverdampfer), gewonnen.

Die Reaktionsteilnehmer können aber beispielsweise auch bei einer Temperatur von 270 - 350°C in der Schmelze in einem kontinuierlich oder absatzweise arbeitenden Mischaggregat (z.B. Ein- oder Zweiwellenextruder, Kneter) umgesetzt, werden.

Die reaktive Verbindung wird dabei vorzugsweise in flüssiger Form, insbesondere innerhalb der Knetzone eines Mischaggregats zur Schmelze des Polymeren zudosiert.

Bevorzugt werden in den Mikropulvern modifizierte Polyarylenethersulfone oder -ketone $B_2$) eingesetzt, die durch Umsetzen von 80 bis 99,9 Gew.-%, insbesondere 90 bis 99 Gew.-% des unmodifizierten Polyarylenethersulfonen oder -ketonen $B_1$), mit 0,1 bis 20 Gew.-%, insbesondere 1 bis 10 Gew.-% der reaktiven Verbindung erhalten worden sind.

Besonders bevorzugt werden als Komponente B2) mit 0,1 bis 1,5 Gew.-% Maleinsäureanhydrid gepfropfte Polyarylenethersulfone. Dabei werden Polyarylenethersulfone, enthaltend 5 bis 95 Mol-% Einheiten $I_1$ und 5 bis 95 Mol-% Einheiten $I_2$ bevorzugt.

Polyarylenethersulfone mit 80 bis 95, vorzugsweise 85 bis 95 mol-% Einheiten der Formel $I_2$ und $I_1$ und entsprechend 5 bis 20, vorzugsweise 5 bis 15 mol-% Einheiten der Formel $I_1$ bzw. $I_2$ seien hier insbesondere erwähnt.

Als Radikalstarter können in der Regel die in der Fachliteratur (z.B. J.K. Kochi, "Free Radicals", J. Wiley, New York, 1973) beschriebenen Verbindungen Verwendung finden.

Üblicherweise werden die Radikalstarter in Mengen von etwa 0,01 bis etwa 1 Gew.-%, bezogen auf die eingesetz-

ten Polyarylenethersulfone oder -ketone $B_1$) verwendet. Selbstverständlich können auch Mischungen unterschiedlicher Radikalstarter eingesetzt werden.

Die in den erfindungsgemäßen Formmassen als Mikropulver enthaltenen Polyphenylenether $B_3$) sind an sich bekannt.

Es handelt sich um Verbindungen auf Basis von substituierten, insbesondere disubstituierten Polyphenylenethern, wobei der Ethersauerstoff der einen Einheit an den Benzolkern der benachbarten Einheiten gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether), Poly(2,6-dibenzyl-1,4-phenylenether), Poly(2-ethoxy-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,2 bis 0,7 dl/g, bevorzugt von 0,42 bis 0,6 dl/g gemessen in Chloroform bei 30°C, aufweisen.

Diese Grenzviskosität entspricht einem mittleren Molekulargewicht (Gewichtsmittel) $\overline{M}_w$ von 10.000 bis 50.000, bevorzugt 25.000 bis 50.000 und insbesondere 40.000 bis 50.000.

Die Bestimmung der Molekulargewichtsverteilung erfolgt im allgemeinen mittels Gelpermeationschromatographie (Shodex-Trennsäulen 0,8 x 50 cm des Typs A 803, A 804 und A 805 mit THF als Elutionsmittel bei Raumtemperatur). Die Lösung der PPE-Proben in THF erfolgt unter Druck bei 110°C, wobei 0,16 ml einer 0,25 gew.-%igen Lösung eingerührt werden.

Die Detektion erfolgt mit einem UV-Detektor. Die Eichung der Säulen wurde mit PPE-Proben durchgeführt, deren absolute Molekulargewichtsverteilungen durch eine GPC-Laser-Lichtstreuungskombination bestimmt wurde.

Selbstverständlich können auch Mischungen von Polyphenylenethern mit unterschiedlichen Molekulargewichten eingesetzt werden, wobei das Mischungsverhältnis beliebig ist.

Der Polyphenylenether $B_3$) kann bis zu 50 Gew.-%, bevorzugt bis zu 40 Gew.-%, bezogen auf $B_3$) durch ein vinylaromatisches Polymer ersetzt sein, das vorzugsweise mit dem eingesetzten Polyphenylenether verträglich ist.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht.

Als monovinylaromatische Verbindungen kommen dabei insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel der Molekulargewichts $M_w$ von 100 bis 300.000 aufweisen, die nach üblichen Methoden bestimmt werden können.

Als Comonomere zur Herstellung von Copolymerisaten kommen z.B. (Meth)acrylsaure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage.

Die Comonomeren sind je nach ihrer chemischen Struktur in unterschiedlichen Mengen in deren Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Scie. Band 22 (1982) Seite

705ff beschrieben. Die Herstellung der Copolymeren erfolgt nach bekannten Verfahren, die beispielsweise in Ullmanns Enzyklopädie der techn. Chemie, Band 19, Seite 273ff, Verlag Chemie, Weinheim (1980) beschrieben sind. Die Copolymerisate haben im allgemeinen Gewichtsmittel des Molekulargewichts ($M_w$) von 10.000 bis 300.000, die nach üblichen Methoden bestimmt werden können.

Bevorzugte vinylaromatische Verbindung ist ein schlagfest modifiziertes Polystyrol, dessen Kautschukgehalt im allgemeinen von 3 bis 20 Gew.-%, vorzugsweise von 4 bis 15 Gew.-% beträgt.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

Als Kautschuke werden die üblicherweise für die Schlagzähmodifizierung von Styrolpolymerisaten gebräuchlich natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16-34 (1963), unter -20°C besitzen.

Es können auch Mischungen von schlagfest modifizierten und nichtschlagfest modifizierten vinylaromatischen Polymeren eingesetzt werden, wobei das Mischungsverhältnis beliebig ist.

Die Mikropulver können als Polymer B), Polyimide ($B_4$) enthalten. Wesentlich hierbei ist, daß die Polyimide thermoplastisch verarbeitbar sind oder sich entsprechend gut in geeigneten Lösungsmitteln lösen lassen, damit derartige Mikropulver hergestellt werden können.

Bevorzugte Polyimide und deren Herstellung sind z.B. in der DE-A 4 404 891 beschrieben. Derartige Polyimide weisen in der Regel reduzierte Viskositäten im Bereich von 20 bis 200 ml/g auf. Vorzugsweise liegen die reduzierten Viskositäten im Bereich von 30 bis 130 ml/g. Dabei werden die reduzierten Viskositäten in N-Methylpyrrolidon bei einer Konzentration von 0,5 g/100 ml gemessen. Derartige Polyimide fallen im allgemeinen als kristalline Substanzen an. In der Regel lassen sie sich jedoch nicht rekristallisieren. Die Schmelzpunkte und Glasübergangstemperaturen werden üblicherweise mittels DSC bestimmt. Dazu werden die Polyimide mit einer Heizrate von 20°C/min aufgeheizt. Im allgemeinen liegen die Schmelzpunkte im Bereich von 250 bis 500, insbesondere von 280 bis 450°C. Die Glasübergangstemperaturen liegen im allgemeinen im Bereich von 200 bis 400, insbesondere von 220 bis 380°C.

Um gute mechanische Eigenschaften zu erzielen, ist es vorteilhaft, wenn der Zahlenmittelwert des Molekulargewichtes $\overline{M}_n$ der erfindungsgemäßen Polyimide mindestens 8000 g/mol beträgt. Für viele Anwendungszwecke kann $\overline{M}_n$ im Bereich von 15 000 bis 20 000 g/mol liegen; Molekulargewichte $\overline{M}_n$ von mehr als 30 000 g/mol sind meist nicht erforderlich.

Die in der DE-A 44 04 891 beschriebenen Polyimide zeichnen sich durch ihre gute Löslichkeit in den genannten Lösungsmitteln aus. Im allgemeinen sind sie auch in Konzentrationen von über 10 Gew.-% vollständig in diesen löslich.

Weitere geeignete Polyimide sowie deren Herstellverfahren sind den der US 3 234 181, EP-A 117 416 sowie US 4 065 345 zu entnehmen.

Neben den wesentlichen Komponenten A) und B) können die Mikropulver noch z.B. bis zu 40 Gew.-% weitere Additive C) wie Flammschutzmittel, Füllstoffe oder Stabilisatoren enthalten, wobei sich das Gesamtgewicht der Komponenten A) bis C) jeweils zu 100 % ergänzt.

Die Sprühtrocknung der Polymeren B) erfolgt durch Zerstäuben der Schmelzen oder Lösungen in ein unter den Verfahrensbedingungen inertes Gas wie Luft oder Stickstoff. Vorzugsweise werden die Polymeren B) vor dem Versprühen in einem Lösungsmittel gelöst.

Als Lösungsmittel eignen sich dipolar aprotische Flüssigkeiten. Zu den geeigneten Lösungsmitteln zählen N-substituierte Säureamide, Sulfoxide und Sulfone. Beispiele sind N,N-Dimethylformamid, N,N-Dimethylacetamid, N-Methylpyrrolidon, Dimethylsulfon, Tetramethylensulfon (Sulfolan) oder Diphenylsulfon. Darunter sind N-Methylpyrrolidon, Dimethylsulfoxid und Dimethylformamid besonders bevorzugt. Für besonders schwerlösliche Polymere B) eignet sich vor allem Diphenylsulfon, Ditolylsulfon oder Trifluoressigsäure als Lösungsmittel.

Entweder kann die Zerstäubungstemperatur so gewählt werden, daß die Schmelze oder die Lösung, die für die Zerstäubung geeignete Viskosität besitzt, oder der Feststoffgehalt der Lösung kann so gewählt werden, daß die Lösung die geeignete Viskosität bei einer bestimmten Zerstäubungsternperatur hat, wobei letzteres bevorzugt wird. Die reduzierte Viskosität der Lösung beträgt bei Zerstäubungstemperatur bis zu 8 000 mPas. Sie kann auch darüber liegen, beispielsweise 10 000 mPas. Im allgemeinen sind Lösungen höherer Viskositäten nur noch schwer zu zerstäuben. Bevorzugt werden reduzierte Viskositäten von 1 000 mPas und weniger. Besonders bevorzugt werden 5 bis 500 mPas, insbesondere 10 bis 100 mPas.

Im allgemeinen werden die Lösungen, die Raumtemperatur haben, zerstäubt. Um deren Viskosität zu verringern, kann es erforderlich sein, die Lösungen bei erhöhter Temperatur, beispielsweise bei 50 bis 100°C zu versprühen. In der Regel liegen die Zerstäubungstemperaturen jedoch unterhalb der Siedetemperatur des jeweiligen Lösungsmittels.

Zur Zerstäubung können pneumatische Zerstäuber wie Mehrstoffdüsen, insbesondere Zweistoffdüsen verwendet werden. Als Beispiel hierfür seien zweiflutige oder dreiflutige Zweistoffdüsen genannt. Um einen Drall oder eine Strömungsumlenkung zu erzeugen, können die Zweistoffdüsen Einbauten enthalten. Diese können sowohl gas- als auch flüssigkeitsseitig angebracht sein. Es ist auch möglich, Ultraschallzerstäuber einzusetzen.

Das Verhältnis von Zerstäubergasmassen- zu Flüssigkeitsmassendurchsatz ist im allgemeinen größer 2. Als besonders vorteilhaft haben sich Zerstäubergas-/Flüssigkeitsdurchsätze im Verhältnis von 3 bis 10 erwiesen. In der Regel sind Gasdrucke von 5 bar oder mehr erforderlich. Mehr als 100 bar Gasdruck sind nur selten nötig. Im allgemeinen betragen die Gasdrucke von 10 bis 70 bar.

Nach der Zerstäubung können die Flüssigkeitströpfchen in einer Trockenkammer beispielsweise in einem Sprühturm bekannter Bauart getrocknet werden (siehe z.B. K. Masters: Spray Drying Handbook, Leonhard Hill Books, London 1972). Die Verdampfung des Lösungsmittels kann sowohl bei Normaldruck als auch im Vakuum erfolgen. Die zur Lösungsmittelverdampfung erforderliche Wärme wird dabei bevorzugt am Kopf des Turmes durch ein inertes Trocknungsgas zugeführt. Als Trocknungsgas eignet sich vor allem Stickstoff. Es können aber auch andere Gase wie Kohlendioxid oder Luft verwendet werden. Die Gastemperatur am Kopf des Trockenturms ist vorzugsweise größer als die Verdampfungstemperatur des Lösungsmittels und kann von Raumtemperatur bis 500°C betragen. Im allgemeinen beträgt sie 100°C oder mehr. Bevorzugt liegt sie im Bereich von 200°C bis 300°C.

Vorzugsweise strömt das Trocknungsgas zusammen mit den Flüssigkeitströpfchen durch den Trockenturm und wird am Ausgang des Turmes zusammen mit dem Trockengut abgesaugt. Die Gastemperatur am Ausgang des Turmes hängt von dem gewünschten Restlösungsmittelgehalt des Pulvers ab. Sie kann von Raumtemperatur bis knapp weniger als die Gastemperatur am Kopf des Trockenturms betragen. In der Regel beträgt sie 50°C oder mehr, beispielsweise 120°C bis 170°C. Im allgemeinen sind Temperaturen größer als 200°C nicht erforderlich.

Das Pulver kann im allgemeinen wie üblich durch Filter oder Zyklone von dem Gasstrom getrennt werden. Für die Herstellung der erfindungsgemäßen Mikropulver werden bevorzugt Filter zur Feststoffabtrennung verwendet.

Der Restlösungsmittelgehalt des Mikropulvers beträgt ohne Nachtrocknung im allgemeinen nicht mehr als 5 %, insbesondere kleiner als 2 %. Um den Gehalt an Restlösungsmittel weiter zu verringern, kann der Sprühtrocknung eine Nachtrocknung, die mit einer Nachkühlung kombiniert sein kann, nachgeschaltet sein. Die Nachtrocknung kann beispielsweise in einem Wirbelbett oder Fließbett erfolgen.

Bei der Sprühtrocknung ist es möglich Sprühhilfsmittel mitzuverwenden. Als Sprühhilfsmittel sind beispielsweise feinkörnige anorganische Materialien wie Silizumdioxid, hydrophobe Kieselsäure oder Aluminiumoxid insbesondere Polytetrafluorethylen zu nennen. Die Sprühhilfsmittel werden in der Regel in Mengen von 0,1 bis 20 Gew.-%, insbesondere 1 bis 5 Gew.-%, bezogen auf Polymeren B), angewandt.

Die erfindungsgemäßen Formmassen können nach an sich bekannten Verfahren thermoplastisch zu Formkörpern, Fasern, flächigen Gebilden oder Folien verarbeitet werden. Sie zeichnen sich allgemein durch gute mechanische Eigenschaften aus.

Bevorzugt werden im Rahmen der erfindungsgemäßen Verwendung aus den vorstehend beschriebenen Formmassen mit energiereicher Strahlung beschriftete Formkörper hergestellt.

Nach dem erfindungsgemäßen Verfahren zur Beschriftung von Formkörpern auf der Basis thermoplastischer Kunststoffe wird letzterem zunächst das Mikropulver zugesetzt und aus der so erhältlichen Mischung über die Schmelzphase Formkörper hergestellt. Anschließend werden diese Formkörper energiereicher Strahlung ausgesetzt, um die gewünschte Beschriftung zu erhalten.

Wesentlich für das erfindungsgemäße Verfahren ist, daß als Additiv das vorstehend beschriebene Mikropulver des Polymeren B) eingesetzt wird.

Weiterhin können die erfindungsgemäßen Formmassen 1 bis 200 vorzugsweise 5 bis 100 ppm eines Pigmentes enthalten.

Ein bevorzugtes Beispiel solcher Additive ist Knochenasche, die z.B. aus calzinierten oder gemahlenen Tierknochen erhältlich ist. Durch entsprechende Zerkleinerung und Nachbehandlung von roher Knochenholzkohle sind Produkte erhältlich, die in Farbintensität und Teilchengröße variieren.

Herkömmliche Knochenasche hat im allgemeinen etwa folgende Zusammensetzung:

| | |
|---|---|
| 85 bis 90 Gew.-% | Calciumphosphat |
| 7,5 bis 12 Gew.-% | Kohlenstoff |
| ~ 1,5 Gew.-% | Wasser |

Der pH-Wert liegt im allgemeinen im Bereich von 7 bis 9, insbesondere von 7,5 bis 8,5 und die Dichte im Bereich von 1,8 bis 3,0, vorzugsweise 2,1 bis 2,5 $g/cm^3$.

Für die erfindungsgemäßen Formmassen geeignete Knochenasche ist z.B. von Hoover Colour Corporation unter der Bezeichnung "Bone Black" erhältlich.

Als Ruß sind prinzipiell Produkte geeignet, wie sie z.B. in Encyclopedia of Chemical Technology, Vol. 3, S. 34 ff (Interscience Encyclopedia, New York) beschrieben sind.

Weitere geeignete Pigmente sind Eisenoxidschwarz ($Fe_3O_4$), Spinellschwarz ($Cu(Cr,Fe)_2O_4$) und Manganschwarz (Mischung aus Mangandioxid, Siliciumdioxid und Eisenoxid). Weiterhin sind auch Kupferphthalocyaninpigmente einsetzbar.

Als energiereiche Strahlung im erfindungsgemäßen Verfahren kann z.B. Elektronen- oder Laserstrahlung verwendet werden, wobei Laserstrahlung bevorzugt verwendet wird. Besonders bevorzugt werden Nd:YAG-Festkörperlaser eingesetzt. Die zu beschriftenden Formkörper können z.B. über eine entsprechende Maske, die der gewünschten Beschriftung entspricht, der Strahlung ausgesetzt werden, die Steuerung des Elektronen- oder Laserstrahls kann aber auch durch computergesteuerte Ablenkspiegel erfolgen.

Intensität und Dauer der Belichtung beeinflussen dabei Kontrast, Eindringtiefe und Oberflächenstruktur des Formkörpers. Detailliertere Aussagen hierüber finden sich beispielsweise in zwei einschlägigen Veröffentlichungen in Kunststoffe 81 (1991), Heft 4, Seiten 341ff sowie in Kunststoffe 78 (1988), Heft 8, Seiten 688ff die sich mit der Laserbeschriftung von Formkörpern aus thermoplastischen Kunststoffen befassen. Weiterhin seien die DE-A 39 36 926, DE 36 19 670, DE 30 44 722 und die EP-A 190 997 genannt.

Aus den erfindungsgemäßen Formmassen sind laserbeschriftbare Formkörper herstellbar, die eine gut lesbare dunkle Schrift vor hellem Hintergrund aufweisen.

Beispiele

Es wurden folgende Komponenten eingesetzt:

A/1: Polyamid 66 mit einer Viskositätszahl (VZ) von 151 ml/g, gemessen in 96 gew.-%iger $H_2SO_4$ als 0,5 gew.-%ige Lösung bei 25°C nach ISO 307 (Ultramid® A3 der BASF AG)

A/2: Polybutylenterephthalat mit einer VZ von 130 ml/g, gemessen in Phenol/Dichlorbenzol (1:1) als 0,5 gew.-%ige Lösung bei 25°C (Ultradur® B 4500 der BASF AG)

A/3: Polyoxymethylencopolymerisat, hergestellt aus einer Mischung aus 97,3 Gew.-% Trioxan und 2,7 Gew.-% Butandiolformal, welches etwa 3 Gew.-% nicht umgesetztes Trioxan und 5 Gew.-% thermisch instabile Anteile enthielt. Nach Abbau der thermisch instabilen Anteile und Entfernung des freigesetzten Trioxans und Formaldehyds hatte das Copolymer ein Schmelzindex von 9 g/10 min (2,16 kg Belastung bei 190°C nach DIN 53 735). Das Rohpolymerisat enthielt 0,4 Gew.-% Irganox® 245 (Ciba-Geigy) und 0,2 Gew.-% eines Melamin-Formaldehyd-Kondensats entsprechend Bsp. 1 der DE-A 25 40 207

A/4: Homopolypropylen mit einem Schmelzindex von 11 g/10 min (2,16 kg/230°C) (Novolen® 1100 N der BASF AG)

B/1: Polyethersulfon-Mikropulver mit mittlerer Teilchengröße von 6,5 um und einer VZ von 52 ml/g gemessen in 1 gew.-%iger Lösung aus Phenol/1,2-Dichlorbenzol (1:1).

Die Herstellung des Mikropulvers erfolgte gemäß Beispiel 2 der DE-A 43 00 326:

Es wurde eine 16 gew.-%ige Lösung eines Polyarylenethersulfons, enthaltend im wesentlichen sich wiederholende Einheiten $I_1$

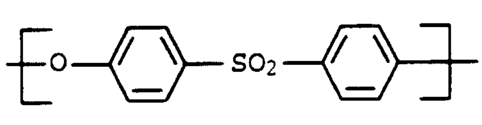

($I_1$)

mit einer Viskositätszahl von 52 ml/g (gemessen in einer 1 Gew.-%igen Lösung aus Phenol und 1,2-Dichlorbenzol im Verhältnis 1:1) und einem Volumenfließindex von 140 ml/10 min (gemessen bei 360°C) in N-Methylpyrrolidon hergestellt. Diese Lösung, die eine reduzierte Viskosität von 200 mPas hatte, wurde in einer pneumatischen Zweistoffdüse mit 0,5 mm Flüssigkeitseinsatz (Modell 970 der Firma Schlick) bei einem Druck von 2 bar versprüht. Der Flüssigkeitsdurchsatz betrug 300 g/h. Stickstoff, dessen Temperatur 220°C betrug, diente als Düsengas. Als Trockenkammer wurde ein Trockenturm mit einem Durchmesser von 20 cm und einer Länge von 2 m verwendet. Als Trockengas wurde Stickstoff, dessen Temperatur am Kopf des Trockenturmes 180°C betrug, verwendet. Die Stickstofftemperatur am Ausgang des Turms betrug 155°C.

Es wurden sphärische Teilchen mit glatter Oberfläche und einem mittleren Durchmesser (Zahlenmittelwert) von

6,5 µm erhalten. Dabei waren 96 Gew.-% des Mikropulvers Teilchen mit einem Druchmesser von kleiner 24 µm. Der Relative Span-Faktor betrug 2,5. Die Teilchendichte betrug 1,37 g/ml und das Schüttgewicht des Pulvers betrug 200 g/l.

Die Teilchengrößen wurden mittels eines Partikelgrößenanalysators (Modell Helos der Firma Sympatec) bestimmt. Dazu wurden jeweils 1 g des Mikropulvers in 100 ml $H_2O$ unter Zusatz eines Tensids mittels Ultraschall dispergiert und von der so erhaltenen Dispersion 1 ml abgenommen und wiederum in 100 ml Wasser dispergiert. Die Messung der Teilchengrößen erfolgte durch Laser-Beugungsbestimmung (Laser-Beugungs-Partikelgrößenmeßgerät Cilas 715).

B/2: Polyethersulfon-Granulat (mit wiederholbaren Einheiten wie bei B/1) beschrieben) mit einer VZ von 53 ml/g gemessen in 1 gew.-%iger Lösung aus Phenol/1,2-Dichlorbenzol (1:1).

C: Ruß mit einer mittleren Teilchengröße (arithmetisches Mittel) von 14 nm (Printex® 90 der Degussa AG)

Herstellung der Formmassen

Die Komponenten A bis C wurden bei Raumtemperatur in einem Trockenmischer gemischt, auf einem Zweiwellenextruder, ZSK 40 (120 U/min, 20 kg/h), konfektioniert, verstrangt auf einer Spritzgußmaschine zu Prüfkörpern verarbeitet.

Verarbeitungstemperaturen für die Mischungen B und gegebenenfalls C mit

A/1: 280°C
A/2: 260°C
A/3: 250°C
A/4: 220°C

Die Zugfestigkeit wurde nach DIN 53 455, die Schlagzähigkeit nach DIN 53453 und die Reißdehnung nach ISO 527 bestimmt.

Die Ergebnisse der Messungen und die Zusammensetzungen der Formmassen sind in der Tabelle 1 zu entnehmen:

Tabelle 1

| Beispiel | Zusammensetzung Gew.-% | Schlagzähigkeit (kJ/m) | Reißdehnung (%) | Streckspannung (N/mm) |
|---|---|---|---|---|
| 1 | 98 A/1, 2B/1 | k.B. | 10.0 | 90 |
| 3V | 98 A/1, 2B/2 | 8.0 | 3.9 | 65 |
| 6 | 98 A/2, 2B/1 | k.B. | 37 | 60 |
| 5V | 98 A/2, 2B/2 | 5.0 | 8.4 | 45 |

V zum Vergleich
k.B. kein Bruch

Laserbeschriftung

Die in den Tabellen angegebenen Polymerzusammensetzungen wurden zu Rundscheiben verspritzt und mit einem Nd:YAG-Festkörperlaser (Wellenlänge 1.064 µm, Geschwindigkeit 400 mm/sec) beschriftet. Weitere Verfahrensparameter wie Blende, Lampenstrom und Impulsfrequenz wurden für jedes Material optimiert (siehe Tabelle).

Die Beurteilung der Beschriftung erfolgt durch Bestimmung des Kontrastes als Verhältnis von Hintergrund- und Zeichenleichtdichte bei Beleuchtungsstärke von 500 cd/$m^2$ (je höher der Meßwert, desto besser der Kontrast), und durch visuelle Beurteilung (Note 1 = sehr gut, 6 = sehr schlecht). Ergebnisse der Laserbeschriftung und Zusammensetzungen der Formmassen sind Tabelle 2 zu entnehmen.

Tabelle 2: Ergebnisse der Laserbeschriftung

| | Zusammensetzung (Gew.-%) | Beschriftungsbedingungen | | | Beurteilung der Beschriftung | | | | |
|---|---|---|---|---|---|---|---|---|---|
| | | Blenden-durchmesser mm | Lampen-stromstärke Ampere | Impuls-frequenz kHz | Kontrast max. | visuelle Beurteilung | | | |
| | | | | | | Gleich-mäßig-keit | Kontur-schärfe | Ober-fläche | Gesamt-urteil |
| 1 | 98 A/1, 2 B/1 | 2.2/2.6 | 16.8 | 4.0 | 3.7 | 3+ | 2+ | 3 | 2- |
| 2 | 98 A/1 2B/1 10 ppm C | 2.2/2.6 | 16.8 | 4.0 | 4.0 | 3+ | 2+ | 3+ | 2 |
| 3V | 98 A/1, 2 B/2 | 2.2/2.6 | 19.1 | 5.0 | 2.3 | 3 | 3 | 3 | 3 |
| 4V | 100 A/1, 10 ppm C | 2.2/2.6 | 20.9 | 4.0 | nicht beschriftbar | | | | |
| 5V | 98 A/2, 2 B/2 | 2.2/2.6 | 20.2 | 4.2 | 1.5 | 3- | 3 | 2- | 4+ |
| 6 | 98 A/2, 2 B/1 | 2.2/2.6 | 20.9 | 4.0 | 3.8 | 3 | 2 | 3 | 2 |
| 7V | 100 A/2 | 2.2/2.6 | 20.9 | 4.0 | 1.0 | unsaubere Schrift | | | |
| 8 | 98 A/3, 2 B/1 | 1.9 | 13.3 | 3.0 | 2.6 | 3 | 4 | 3 | 3 |
| 9V | 100 A/3 | 1.9 | 17.0 | 3.0 | nicht beschriftbar | | | | |
| 10 | 98 A/4, 2 B/1 | 1.9 | 14.3 | 3.0 | 3.8 | 3- | 2 | 2 | 2 |
| 11V | 100 A/4 | 2.5 | 12.8 | 4.0 | 2.1 | 4 | 4 | 4 | 4 |

V: zum Vergleich

**Patentansprüche**

1. Formmassen auf der Basis thermoplastischer oder duroplastischer Kunststoffe A), enthaltend 0,05 bis 10 Gew.-%, bezogen auf A), eines Mikropulvers mit sphärischen Teilchen einer im wesentlichen glatten Oberflächenstruktur und einer Dichte, die im wesentlichen der der Komponente B) entspricht und das Mikropulver durch Prillen der Schmelzen oder Sprühtrocknung der Lösungen der Polymeren B) erhältlich ist, welches als wesentliche Komponente mindestens ein Polymer B), welches verschieden von A) ist, enthält, ausgewählt aus der Gruppe der Polyphenylenether, Polyarylenethersulfone, Polyarylenetherketone oder Polyimide.

2. Formmassen nach Anspruch 1, enthaltend als Kunststoff A) ein Polyoxymethylenhomo- oder copolymerisat, Polycarbonat, Polyester, Polyamid, Polyolefin, Polymethylmethacrylat, Acrylnitril-Butadien-Styrol-Polymerisat (ABS) und/oder Acrylnitril-Styrol-Acrylester-Polymerisat (ASA).

3. Formmassen nach den Ansprüchen 1 oder 2, in denen der mittlere Teilchendurchmesser des Mikropulvers 1 bis 100 µm beträgt.

4. Formmassen nach den Ansprüchen 1 bis 3, in denen das Mikropulver als wesentliche Komponente

   $B_1$) Polyarylenethersulfone oder Polyarylenetherketone mit wiederkehrenden Einheiten I enthält

   $$-N-Ar\left(-T-Ar^1\right)_t-Z\left(-Ar^2-Q-\right)_q Ar^3- \qquad (I)$$

   in denen t und q jeweils den Wert 0 oder eine ganze Zahl von 1 bis 3 annehmen können; N -O- oder -S- bedeuten kann; T und Q eine chemische Bindung oder eine Gruppe ausgewählt aus -O-, -S-, C=O, S=O, $-SO_2-$, -N=N, $-R^aC=CR^b-$ und $-CR^cR^d-$ sein können; $R^a$ und $R^b$ jeweils Wasserstoffatome, $C_1$- bis $C_{10}$-Alkylgruppen, $R^c$ und $R^d$ jeweils Wasserstoffatome, $C_1$- bis $C_{10}$-Alkyl-, $C_1$- bis $C_{10}$-Alkoxy-, $C_1$- bis $C_{10}$-Alkylaryl- oder $C_6$- bis $C_{18}$-Arylgruppen bedeuten können, wobei die vorgenannten Gruppen jeweils auch mit Fluor und/oder Chloratomen substituiert sein können; Z eine Gruppe ausgewählt aus C=O, S=O und $-SO_2-$ sein kann; Ar, $Ar^1$, $Ar^2$ und $Ar^3$ für $C_6$- bis $C_{18}$-Arylgruppen stehen, wobei diese Substituenten haben können, ausgewählt aus $C_1$- bis $C_{10}$-Alkyl-, $C_1$- bis $C_{10}$-Alkylaryl-, $C_6$- bis $C_{18}$-Aryl-, $C_1$- bis $C_{10}$-Alkoxyreste und Halogenatome oder deren statistischen Copolymerisate oder Blockcopolymerisate oder

   B2) Polyarylenethersulfone oder -ketone, erhältlich durch Umsetzen von $B_1$) mit einer reaktiven Verbindung, die neben einer C-C-Doppel- oder Dreifachbindung eine bzw. mehrere Carbonyl-, Carbonsäure-, Carboxylat-, Säureanhydrid-, Säureamid-, Carbonsäureester-, Amino-, Hydroxyl-, Epoxi-, Oxazolin-, Urethan-, Harnstoff-, Lactam- oder Halogenbenzylgruppen enthält oder deren statistischen Copolymerisaten oder Blockcopolymerisaten

   oder Mischungen aus $B_1$) mit $B_2$).

5. Formmassen nach den Ansprüchen 1 bis 4, in denen das Mikro] pulver als wesentliche Komponente einen Polyphenylenether $B_3$) enthält, welcher gegebenenfalls bis zu 50 Gew.-% bezogen auf $B_3$) durch ein vinylaromatisches Polymer ersetzt sein kann.

6. Verwendung der Formmassen gemäß einem der Ansprüche 1 bis 5 zur Herstellung von Fasern, Folien und Formkörpern.

7. Verwendung der Formmassen gemäß einem der Ansprüche 1 bis 5 zur Herstellung von mit Hilfe von energiereicher Strahlung beschriftbaren Formkörper.

8. Verfahren zur Beschriftung von Formkörpern auf der Basis thermoplastischer Kunststoffe, wobei dem thermoplastischen Kunststoff ein Additiv zugemischt wird und aus der so erhaltenen Mischung durch Verarbeitung über die Schmelzphase Formkörper hergestellt werden und anschließend die Formkörper energiereicher Strahlung ausgesetzt werden, dadurch gekennzeichnet, daß als Additiv ein Mikropulver gemäß einem der Ansprüchen 1 oder 3 bis 5 eingesetzt wird.

**9.** Verfahren nach Anspruch 8, dadurch gekennzeichnet, daß als zusätzliches Additiv Ruß oder Asche aus dem Rückstand trockendestillierbarer Biomasse oder deren Mischungen eingesetzt wird.

**10.** Formkörper erhältlich aus den Formmassen gemäß den Ansprüchen 1 bis 5.

**11.** Beschriftete Formkörper, erhältlich nach dem Verfahren gemäß einem der Ansprüche 8 oder 9.

## Claims

**1.** A molding material based on thermoplastics or thermosetting plastics A), containing from 0.05 to 10% by weight, based on A), of a micropowder which has spherical particles possessing an essentially smooth surface structure and a density corresponding essentially to that of component B), wherein the micropowder is obtainable by prilling the melt or spray-drying the solution of the polymer B) and contains, as an essential component, at least one polymer B) which differs from A) and is selected from the group consisting of the polyphenylene ethers, polyarylene ether sulfones, polyarylene ether ketones and polyimides.

**2.** A molding material as claimed in claim 1, containing, as plastic A), a polyoxymethylene homopolymer or copolymer, polycarbonate, polyester, polyamide, polyolefin, polymethyl methacrylate, acrylonitrile/butadiene/styrene polymer (ABS) and/or acrylonitrile/styrene/acrylate polymer (ASA).

**3.** A molding material as claimed in claim 1 or 2, in which the mean particle diameter of the micropowder is from 1 to 100 µm.

**4.** A molding material as claimed in any of claims 1 to 3, in which the micropowder contains, as an essential component,

B1) polyarylene ether sulfones or polyarylene ether ketones having repeating units I

$$-N-Ar\left(-T-Ar^1\right)_t-Z\left(-Ar^2-Q\right)_q-Ar^3- \qquad (I)$$

where t and q may each be 0 or an integer from 1 to 3, N may be -O- or -S-, T and Q may each be a chemical bond or a group selected from -O-, -S-, C=O, S=O, $-SO_2-$, -N=N, $-R^aC=CR^b-$ and $-CR^cR^d-$, $R^a$ and $R^b$ may each be hydrogen, $C_1$-$C_{10}$-alkyl, $R^c$ and $R^d$ may each be hydrogen, $C_1$-$C_{10}$-alkyl, $C_1$-$C_{10}$-alkoxy, $C_1$-$C_{10}$-alkylaryl or $C_6$-$C_{18}$-aryl, where the abovementioned groups may each furthermore be substituted by fluorine and/or chlorine, Z may be a group selected from C=O, S=O and $-SO_2-$, Ar, $Ar^1$, $Ar^2$ and $Ar^3$ are each $C_6$-$C_{18}$-aryl which may have substituents selected from the group consisting of $C_1$-$C_{10}$-alkyl, $C_1$-$C_{10}$-alkylaryl, $C_6$-$C_{18}$-aryl, $C_1$-$C_{10}$-alkoxy and halogen, or random copolymers or block copolymers thereof, or

$B_2$) polyarylene ether sulfones or polyarylene ether ketones, obtainable by reacting $B_1$) with a reactive compound which, in addition to a C-C double or triple bond, contains one or more carbonyl, carboxyl, carboxylate, anhydride, amide, carboxylic ester, amino, hydroxyl, epoxy, oxazoline, urethane, urea, lactam or halobenzyl groups, or random copolymers or block copolymers thereof,

or a mixture of $B_1$) with $B_2$).

**5.** A molding material as claimed in any of claims 1 to 4, in which the micropowder contains, as an essential component, a polyphenylene ether $B_3$), up to 50% by weight of which, based on $B_3$), may be replaced by a vinylaromatic polymer.

**6.** Use of a molding material as claimed in any of claims 1 to 5 for the production of fibers, films and moldings.

**7.** Use of a molding material as claimed in any of claims 1 to 5 for the production of moldings which can be inscribed with the aid of high-energy radiation.

**8.** A process for inscribing moldings based on thermoplastics, an additive being mixed with the thermoplastic, moldings being produced from the resulting mixture by processing via the melt phase and the moldings then being exposed to high-energy radiation, wherein the additive used is a micropowder as claimed in any of claims 1 or 3 to 5.

**9.** A process as claimed in claim 8, where the additional additive used is carbon black or ash from the residue of dry-distillable biomass or a mixture thereof.

**10.** A molding obtainable from a molding material as claimed in any of claims 1 to 5.

**11.** An inscribed molding obtainable by a process as claimed in claim 8 or 9.

**Revendications**

**1.** Masses à mouler à base de matières thermoplastiques ou de matières duroplastiques A), qui contiennent de 0,05 à 10% en poids, par rapport à A), d'une micropoudre à particules sphériques d'une structure superficielle ou surfacique essentiellement lisse et d'une densité qui correspond en essence à celle du composant B) et la micropoudre peut s'obtenir par granulation des masses fondues ou par le séchage par pulvérisation des solutions des polymères B), contenant, à titre de composant essentiel, au moins un polymère B), qui est différent de A) et qui est choisi dans le groupe formé par les polyphénylèneéthers, les polyarylèneéthersulfones, les polyarylèneéthercétones ou les polyimides.

**2.** Masses à mouler suivant la revendication 1, qui contiennent, à titre de matière plastique A), un homopolymère ou un copolymère de polyoxyméthylène, un polycarbonate, un polyester, un polyamide, une polyoléfine, du poly(méthacrylate de méthyle), un polymère d'acrylonitrile-butadiène-styrène (ABS) et/ou un polymère d'acrylonitrile-styrène-ester acrylique (ASA).

**3.** Masses à mouler suivant la revendication 1 ou 2, dans lesquelles le diamètre moyen des particules de la micropoudre varie de 1 à 100 μm.

**4.** Masses à mouler suivant les revendications 1 à 3, dans lesquelles la micropoudre contient, à titre de composants essentiels,

$B_1$) des polyarylèneéthersulfones ou des polyarylèneéthercétones avec des unités récurrentes I :

$$—N—Ar \left( T—Ar^1 \right)_t Z \left( Ar^2—Q \right)_q Ar^3— \qquad (I)$$

dans lesquelles t et q sont égaux à 0 ou peuvent représenter un nombre entier qui varie de 1 à 3; N peut représenter -O- ou -S-; T et Q représentent une liaison chimique ou un groupe choisi parmi -O-, -S-, C=O, S=O, $-SO_2-$, -N=N, $-R^aC=CR^b-$ et $-CR^cR^d-$; $R^a$ et $R^b$ représentent à chaque fois des atomes d'hydrogène, des radicaux alkyle en $C_1$ à $C_{10}$, $R^c$ et $R^d$ représentent à chaque fois des atomes d'hydrogène, des radicaux alkyle en $C_1$ à $C_{10}$, alcoxy en $C_1$ à $C_{10}$, alkylaryle en $C_1$ à $C_{10}$, ou aryle en $C_6$ à $C_{18}$, où les groupes précités peuvent à chaque fois également être substitués par des atomes de fluor et/ou de chlore; Z est choisi dans le groupe formé par C=O, S=O et $-SO_2-$; Ar, $Ar^1$, $Ar^2$ et $Ar^3$ représentent des radicaux aryle en $C_6$ à $C_{18}$, où ceux-ci peuvent comporter des substituants choisis parmi les radicaux alkyle en $C_1$ à $C_{10}$, alkylaryle en $C_1$ à $C_{10}$, aryle en $C_6$ à $C_{18}$, alcoxy en $C_1$ à $C_{10}$ et des atomes d'halogènes, ou leurs copolymères stochastiques ou leurs copolymères séquencés, ou bien

B2) des polyarylèneéthersulfones ou des polyarylèneéthercétones, que l'on peut obtenir par la réaction de $B_1$) avec un composé réactif, qui, outre une double ou triple liaison C-C, contient un ou plusieurs radicaux carbonyle, acide carboxylique, carboxylate, anhydride d'acide, amide d'acide, ester d'acide carboxylique, amino, hydroxyle, époxy, oxazoline, uréthanne, urée, lactame ou halogénobenzyle, ou leurs copolymères stochastiques ou leurs copolymères séquencés,

ou des mélanges de $B_1$) et $B_2$).

**5.** Masses à mouler suivant les revendications 1 à 4, dans lesquelles la micropoudre contient, à titre de composant essentiel, un polyphénylèneéther $B_3$) qui peut être éventuellement remplacé par jusqu'à 50% en poids par rapport à $B_3$) par un polymère vinylaromatique.

**6.** Utilisation de masses à mouler suivant l'une quelconque des revendications 1 à 5 pour la fabrication de fibres, de feuilles et d'articles ou corps moulés.

**7.** Utilisation des masses à mouler suivant l'une quelconque des revendications 1 à 5 pour la fabrication d'articles ou corps moulés sur lesquels on peut écrire à l'aide d'un rayonnement riche en énergie.

**8.** Procédé pour écrire sur des articles ou corps moulés à base de matières thermoplastiques, conformément auquel on ajoute un additif à la matière thermoplastique et, à partir du mélange ainsi obtenu, on fabrique des articles ou corps moulés par traitement de la phase fondue et on expose ensuite les articles ou corps moulés à un rayonnement riche en énergie, caractérisé en ce que, à titre d'additif, on utilise une micropoudre suivant l'une quelconque des revendications 1 ou 3 à 5.

**9.** Procédé suivant la revendication 8, caractérisé en ce que, à titre d'additif supplémentaire, on utilise du noir de carbone ou de la suie ou des cendres provenant de la biomasse distillable à sec à partir du résidu, ou leurs mélanges.

**10.** Articles ou corps moulés que l'on peut obtenir à partir des masses à mouler suivant l'une quelconque des revendications 1 à 5.

**11.** Articles ou corps moulés sur lesquels on peut écrire, que l'on peut obtenir selon le procédé suivant l'une quelconque des revendications 8 ou 9.